# EUROPÄISCHE PATENTSCHRIFT

(11) **EP 1 343 832 B1**
(45) Veröffentlichungstag und Bekanntmachung des Hinweises auf die Patenterteilung: **16.03.2011**
(21) Anmeldenummer: 01989561.4
(22) Anmeldetag: 03.12.2001
(51) Int. Cl.: C08G 18/40, C08G 18/08, C08G 18/10, C08G 18/76, C09J 175/04

(54) **HOLZKLEBSTOFFE AUF BASIS VON ISOCYANAT-TERMINIERTEN PREPOLYMEREN**
WOOD ADHESIVES BASED ON ISOCYANATE-TERMINATED PREPOLYMERS
ADHESIFS POUR BOIS A BASE DE PREPOLYMERES A TERMINAISON ISOCYANATE

(30) Priorität: 14.12.2000 DE 10062415
(43) Veröffentlichungstag der Anmeldung: 17.09.2003
(73) Patentinhaber: Bayer MaterialScience AG, 51368 Leverkusen (DE)
(72) Erfinder: MECKEL, Walter, 40627 Düsseldorf (DE)
(86) Internationale Anmeldenummer: PCT/EP2001/014096
(87) Internationale Veröffentlichungsnummer: WO 2002/048232

(56) Entgegenhaltungen:
- EP-A- 0 443 157
- GB-A- 1 453 258
- US-A- 4 193 832
- US-A- 5 384 385

## Beschreibung

Die vorliegende Erfindung betrifft die Verwendung von Isocyanat-terminierten Prepolymeren als Holzklebstoffe.

Klebstoffe auf Basis von Phenol- bzw. Resorzin- oder Melamin-Formaldehydkondensaten sind bekannt und werden zur Verklebung von Holz, insbesondere bei stark beanspruchten, langlebigen Holzkonstruktionen eingesetzt (z.B. EP-A 0 879 270). Bei der Reaktion der wässrigen Härtermischung mit dem Melaminharz handelt es sich um eine Polykondensation, bei der beim Polymeraufbau Wasser freigesetzt wird. Daher müssen für einen reproduzierbaren Ablauf der Reaktion strenge Voraussetzungen an den Wassergehalt des Holzes erfüllt sein.

Im Falle stark beanspruchter Holzkonstruktionen, wie z.B. tragende Bauteile, werden hohe Anforderungen an die mechanische Festigkeit der Bauteile gestellt. Beispielsweise sollte die Verbundfestigkeit auch noch nach vielen Jahren unter Witterungseinflüssen ausreichend hoch sein.

Die generelle Brauchbarkeit von Klebstoffen wird durch die Erfüllung von Normen, wie beispielsweise die DIN EN 204, Beanspruchungsgruppe D4 oder WATT 91 (Wood Adhesives Temperature Test) festgestellt.

Das Kleben von Holz mit Polyurethanklebstoffen sowohl als Einkomponenten- als auch als Zweikomponenten-System ist seit langem bekannt und wird in der Zeitschrift "Ahäsion- kleben&dichten", 41, 1-2/97, S. 37-38 (1997) beschrieben. Einkomponenten-Systeme eignen sich insbesondere für Holzsubstrate, da der natürliche Feuchtigkeitsgehalt des Holzes dafür sorgt, dass genügend Wasser als Reaktionspartner zur Verfügung steht. Damit erübrigt sich die Notwendigkeit den Wassergehalt exakt zu kontrollieren oder wie bei vielen wasserundurchlässigen Substraten üblich, eine Benebelung der Substratoberflächen mit Wasser durchzuführen, um eine vollständige Reaktion zu gewährleisten.

Als nachteilig zeigt sich jedoch bei Einkomponenten- sowie auch bei Zweikomponeneten-Systemen, dass bei Einsatz niedrigvikoser Polyisocyanate diese im Preßvorgang in das Holz migrieren. Dies führt zwar zu einer guten Verbindung zwischen Klebstoff und Holz, jedoch findet im Falle einer zu starken Migration eine unkontrollierte Verschiebung des für den Polymeraufbau wichtigen NCO/OH-Verhältnisses statt. Als Folge verarmt der Klebstoff in der Klebfuge an Polyisocyanat und es können im Extremfall Fehlklebungen auftreten.

Um eine ausreichende Konzentration von Klebstoff in der Klebfuge zu gewährleisten, ist es möglich höherviskose Systeme einzusetzen, die jedoch bei der Applikation Probleme bereiten können. Eine andere Möglichkeit besteht in der Zugabe von Füllstoffen. Geeignete Füllstoffe sind beispielsweise organische Füllstoffe; mineralische Füllstoffe sind weniger geeignet, da sie leicht zur Sedimentation neigen und bei der maschinellen Förderung zu erhöhten Abriebwerten in den komplexen Pump- und Dosiersystemen führen können.

Als organische Füllstoffe können beispielsweise Holzmehl, Zellulosefasern, aber auch Kunststoffasern eingesetzt werden. Kunststoffasern in Form von Mikrokurzfasern wirken zusätzlich als Thixotropiezusatz. Besonders geeignete Füllstoffe sind in situ hergestellte Dispersionen von Polyharnstoffen und/oder Polyhydrazodicarbonamiden in Hydroxylgruppen aufweisenden Polyethern, die im großen Rahmen zur Herstellung von Polyurethan-Schaumstoffen mit erhöhter Stauchhärte eingesetzt werden (z.B. DE-OS 25 13 815).

Für flexible Verklebungen mit ausgezeichneter Kohäsionsfestigkeit werden beispielsweise in der DE-OS 27 19 720 einkomponentige als auch zweikomponentige Polyurethanklebstoffe auf Basis von organischen Polyisocyanaten und Dispersionen von Polymeren in organischen Hydroxylverbindungen eingesetzt.

Ein wesentlicher Nachteil von geklebten Holzkonstruktionen ist die Anfälligkeit des Klebstoffs gegenüber Feuchtigkeit, die zu einer Schwächung der Klebstoffschicht führt, die die Verwendung von geklebten Holzkonstruktionen in dauerfeuchten Umgebungen limitiert. Die Folge ist, dass im trockenen Zustand oft ein weitgehendes Fügeteilversagen des Holzes feststellbar ist, während bei längerer Wasserlagerung, bzw. im Kochtest Kohäsionsversagen zu beobachten ist.

Die Aufgabe der vorliegenden Erfindung bestand somit in der Bereitstellung eines einkomponentigen Holzklebstoffes, insbesondere zur Verklebung tragender Bauteile, auf Basis Isocyanat-terminierter Prepolymere, welcher über eine verbesserte Wasserfestigkeit verfügt.

Es wurde nun überraschenderweise gefunden, dass Füllstoffe auf Basis von Polyadditionsprodukten aus beispielsweise Toluylendiisocyanaten und Hydrazinhydrat (Polyhydrazodicarbonsäureamide) zur Naßfestigkeit von Holz positiv beitragen. Da Hydrazodicarbonsäureamidstrukturen zur Ausbildung von Wasserstoffbrücken geeignet sind, wäre eher eine gewisse Hydrophilie und damit schlechtere Naßfestigkeiten zu erwarten gewesen.

Gegenstand der vorliegenden Erfindung ist somit die Verwendung von einkomponentigen Klebstoffen auf Basis von Isocyanat-terminierten Prepolymeren mit einem Isocyanatgehalt von 8 bis 20 Gew.-% und einer Viskosität von weniger als 20000 mPa*s bei 25°C enthaltend
a) mindestens ein organisches Polyisocyanat,
b) mindestens eine organische Polyhydroxylverbindung in Form einer Dispersion enthaltend Umsetzungsprodukte aus
   i) organischen Polyisocyanaten mit
   ii) primären und/oder sekundären Aminogruppen aufweisenden Polyaminen und/oder Hydrazinen und/oder Hydraziden in einem
   iii) mindestens zwei Hydroxylgruppen aufweisenden Polyether mit einem Molekulargewichtsbereich von 500 bis 12000 wobei es sich in der Dispersion b) enthaltenden Umsetzungsprodukte um Polyharnstoffe und/oder Polyhydrazodicarbonamide handelt, wobei diese in dem Isocyanat-terminierten Prepolymer einen Gehalt von 2 Gew.-% bezogen auf die Gesamtmenge an Isocyanat-terminierten Prepolymer, nicht unterschreiben,
c) gegebenenfalls Hilfs- und Zusatzmittel,
zur Verklebung von Holzsubstraten.

Das Isocyanat-terminierte Prepolymer weist bevorzugt einen NCO-Gehalt von 10 bis 18 Gew.% auf.

Die erfindungsgemäß eingesetzten Umsetzungsprodukte b) sind Polyharnstoffe und/oder Polyhydrazodicarbonamide, wobei deren Gehalt von 2, bevorzugt 5 Gew.% im Isocyanat-terminierten Prepolymer nicht unterschritten werden sollte. Ihr Anteil liegt zwischen 2 bis 25, bevorzugt zwischen 5 bis 15 Gew.% bezogen auf die Gesamtmenge an NCO-Prepolymer.

Geeignete Diisocyanate (i) zur Herstellung der dispergierten Polyadditionsprodukte sind z.B. Hexamethylendiisocyanat, 2,4-Diisocyantotoluol, 2,6- Diisocyantotoluol, sowie deren Isomerengemische, 3,3,5-Trimethyl-5-isocyanato-methyl-cyclohexylisocyanat oder 4,4'-Diphenylmethandiisocyanat, gegebenenfalls in Mischung mit 2,4'-MDI und dessen höheren Oligomeren. Bevorzugt ist die Mischung von 2,4- und 2,6-Diisocyanatotoluol in einem Verhältnis von 80 zu 20.

Geeignete Aufbaukomponenten mit gegenüber Isocyanatgruppen reaktionsfähigen Gruppen (ii) sind beispielsweise zwei und/oder mehrwertige, primäre und/oder sekundäre aliphatische, araliphatische, cycloaliphatische und aromatische Amine, wie z.B. Ethylendiamin, Hexamethylendiamin, Trimethyldiaminohexan, N,N'-Dimethylenethylendiamin, höhere Homolege des Ethylendiamins, wie Diethylentriamin, Homologe des Propylendiamins, wie Dipropylentriamin, Piperazin, Triazin, 4-Aminobenzylamin, 4,4'-Diaminodicyclohexylmethan und -propan, 1,4-Diaminocyclohexan, Phenylendiamine, Kondensate aus Anilin und Formaldehyd, Toluylendiamine sowie Bis-aminomethylbenzole. Ebenfalls geeignet ist Hydrazin, sowie mono- oder N,N'-disubstituierte Hydrazine als auch Hydrazide, wie beispielsweise Hydrazide zwei- oder mehrwertiger Carbonsäuren. Bevorzugt ist Hydrazinhydrat.

Als mindestens zwei Hydroxylgruppen aufweisende Polyether (iii) sind geeignet Polyadditionsprodukte von Propylenoxid und/oder Ethylenoxid an bi- und trifunktionellen Startern oder Mischungen derselben wie beispielsweise Wasser, 1,2-Propylenglykol, Trimethylolpropan, Glyzerin, Pentaerythrit oder andere Polyhydroxylverbindungen, wie beispielsweise Polyetherpolyole auf Basis von Tetrahydrofuran (Polytetramethylenetherglykol) oder natürliche, Hydroxylgruppen aufweisende Öle (z.B. Rizinusöl). Selbstverständlich können auch beliebige Mischungen derartiger Polyhydroxylverbindungen eingesetzt werden.

Der Feststoffgehalt der Dispersion b) von Polyharnstoffen und/oder Polyhydrazodicarbonamiden in Hydroxylgruppen aufweisenden Polyethern liegt zwischen 5 und 40 Gew.-%, vorzugsweise zwischen 10 und 25 Gew.-%.

Die sedimentationsstabilen, feinteiligen, als Dispersionen in Hydroxylgruppen aufweisenden Polyethern eingebrachten Polyharnstoff und/oder Polyhydrazodicarbonamidteilchen haben eine Größe von 0,01 bis 10, vorzugsweise 0,01 bis 1 µm. Die Viskositäten solcher Füllstoff enthaltenden Polyole liegen bei 25°C und einem Feststoffgehalt von 20 Gew.-% bei weniger als 10000, bevorzugt bei weniger als 3000 mPa*s.

In einer bevorzugten Ausführungsform der erfindungsgemäßen Verwendung enthält die eingesetzte Dispersion b) die Umsetzungsprodukte aus
- 16,9 Gew.-Teilen einer Mischung von 2,4- und 2,6- Diisocyantotoluol (i) in einem Verhältnis von 80 zu 20 mit
- 4,85 Gew.-Teilen Hydrazinhydrat (ii) in 80 Gew.-Teilen eines Polypropylenetherpolyols (iii) mit einer Funktionalität größer 2 und einem Ethoxyethylengruppengehalt von 0 bis 30 bevorzugt von 5 bis 20 Gew.% und einer Hydroxylzahl von 20 bis 56, bevorzugt von 30 bis 40 mgKOH/g.

Das erfindungsgemäß eingesetzte, gefüllte Polypropylenetherpolyol wird z.B. von der Firma Bayer AG in Leverkusen unter dem Handelsnamen Baycoll BT 5028 vertrieben.

Zum Aufbau der Isocyanat-terminierten Prepolymere eignen sich die aus der Polyurethanchemie bekannten aliphatischen, cycloaliphatischen, aromatischen und heterocyclischen Polyisocyanate, wie sie z.B. von W. Siefgen in Justus Liebigs Annalen der Chemie, 562, Seiten 75 bis 136, beschrieben werden. Weiterhin sind als Polyisocyanate solche Polyisocyanate geeignet, die z.B. über Isocyanurat-, Biuret, Uretdion- oder Carbodiimidgruppen verfügen. Derartige Polyisocyanate können hohe Funktionalitäten, z.B. von mehr als 3, aufweisen.

Bevorzugte Diisocyanate sind 2,4- und/oder 2,6-Diisocyanatotoluol sowie 2,4'-und/oder 4,4'-Diisocyanatodiphenylmethan oder Polyisocyanate wie sie durch Phosgenierung von Anilin/Formaldehyd-Kondensaten erhalten werden, die als Polymer-MDI (P-MDI) bekannt sind und eine Mischung der monomeren 2,2'- sowie 2,4'- und 4,4'-Diphenylmethandiisocyanaten mit höheren Oligomeren (Polydiphenylmethanpolyisocyanate) darstellen. Es ist auch möglich Gemische der monomeren Diphenylmethandiisocyanate und P-MDI einzusetzen.

Zur Herstellung des NCO-Prepolymers wird die Polymer-Dispersion mit dem organischen Polyisocyanat zur Reaktion gebracht, wobei dieses anschließend als unter dem Einfluß von Feuchtigkeit aushärtender Klebstoff verarbeitet wird.

Bei der Herstellung des NCO-Prepolymers kommen auf jede gegenüber Isocyanatgruppen reaktionsfähige Gruppe 3 bis 30, bevorzugt, 5 bis 20 Isocyanatgruppen. Der Anteil der Polyolkomponente b) im fertigen NCO-Prepolymer liegt zwischen 20 bis 75 Gew.%, bevorzugt zwischen 30 bis 60 Gew.-%. Der Anteil der Polyisocyanatkomponente a) liegt zwischen 80 bis 25 Gew.-%, bevorzugt zwischen 70 bis 40 Gew.-%.

Zur Herstellung der Prepolymeren wird generell die Überschußkomponente, das Polyisocyanat a) im Kessel bei Temperaturen von 50 bis 70°C vorgelegt und die Polyolkomponente b) derart zugegegeben, dass die Kesseltemperatur nicht über 80°C ansteigt. Prinzipiel ist es auch möglich die Polyisocyanate a) und die Polyole b) über ein Mischaggregat (z.B. ein Statikmischer oder dynamischer Mischer oder Hochdruckdüsen) miteinander intensiv zu vermischen und dabei zur Reaktion zu bringen.

Bevorzugte Prepolymere werden mit organischen Polyisocyanaten a), mit einem Anteil von 0 bis 60, vorzugsweise 5 bis 40 Gew.-% an difunktionellen 2,4'-MDI und einem Anteil von höheren Oligomeren mit der Funktionalität größer 2 von 0 bis 50, vorzugsweise 0 bis 40 Gew.-% erhalten. Insbesondere der 2,4'-MDI-Anteil trägt zur erhöhten Lagerstabilität der Prepolymeren bei.

Grundsätzlich besteht die Möglichkeit bei der Herstellung der NCO-Prepolymere für die erfindungsgemäße Verwendung entweder
(I) direkt ein 2,4'-MDI enthaltendes organisches Polyisocyant a), mit einem oligomeren Anteil von 20 bis 60 Gew.%, einzusetzen (P-MDI) oder
(II) zunächst die Reaktion mit einem reinem Diisocyanat, welches einen 2,4'-MDI-Gehalt von 40 bis 60 Gew.% enthält, bis zu einem NCO-Gehalt von 8 bis 11 Gew.% durchzuführen und anschließend ein P-MDI mit einem oligomeren Anteil von bis zu 70 Gew.% zuzusetzen, so dass sich in der Mischung ein NCO-Gehalt von 14 bis 18 Gew.% einstellt.

Das nach (II) hergestellte Prepolymer hat eine niedrigere Viskosität gegenüber dem Prepolymer, welches nach (I) erhalten wird.

Die so hergestellten NCO-Prepolymere weisen bei 25°C Viskositäten von kleiner 20000, bevorzugt kleiner 10000 mPa*s auf.

Weiterhin kann beispielsweise die Mitverwendung von bis zu 20 Gew.-Teilen von Amin-gestarteten Polypropylen-/ethylenetherglykolen in der Komponente b) vorteilhaft sein, da sie den Prepolymeren eine beschleunigte Reaktion mit Luftfeuchtigkeit verleihen. Zu nennen sind hier insbesondere Ethylendiamin oder Ammoniak gestartete Polypropylenetherpolyole mit einer OH-Zahl von 40 bis 200 mgKOH/g. Eine solche beschleunigte Reaktion mit Luftfeuchtigkeit kann selbstverständlich auch mit den gängigen, in der Polyurethanchemie üblichen Katalysatoren, beispielsweise tertiäre Aminen, wie Diazabicycloctan, Dimorpholinodiethylether oder Metallkatalysatoren, wie Dibutylzinndilaurat in Mengen von 0,005 bis 0,5 Gew.-% bezogen auf Prepolymer erreicht werden.

Die Prepolymere können noch mit den üblichen Additiven, wie beispielsweise Verdickungsmitteln, z.B. oberflächlich hydrophobierten Aerosilen, Kurzfasern wie Kevlarpulp oder ähnlichen Mikrofasern zur Thixotropierung versehen werden. Es können weiterhin zur Modifizierung der erfindungsgemäß verwendeten Klebstoffe diesen gegebenenfalls weitere Additive zugesetzt werden, wie natürliche oder synthetische Harze, Pigmemte oder Alterungsschutzmittel.

Die erfindungsgemäß verwendeten Klebstoffe zeichnen sich dadurch aus, dass sie bei einer Lagerung von mehreren Tagen in Wasser bei 20°C noch ein ausreichender Fügeteilversagen aufweisen. Daher sind sie insbesondere zur Verklebung hoch beanspruchter Bauteile, wie tragende Holzkonstruktionen, geeignet.

### Beispiele

### Prepolymerherstellung

Die Polyisocyanate werden bei 70°C vorgelegt und die entwässerten Polyole (Wassergehalt <0,05%) werden so zugegeben, daß die Temperatur im Bereich zwischen 60 und 80°C liegt.

Nach Erhalt eines konstanten NCO-Wertes wird das Prepolymer, gegebenenfalls durch Zugabe von Dibutylzinndilaurat, auf eine Filmtrockenzeit von ca. 30 bis 60 Minuten eingestellt.

Hierbei wird die Filmtrockenzeit mit dem BK-Drying-Recorder der Mickle Laboratory Engineering Co. Ltd. (Typ 10) ermittelt (Meßbedingungen: 23°C, 50 % Luftfeuchte, 100 mm Klebstofffilm und 10g Gewicht).

### Polyole

| | |
|---|---|
| Polyol I | Baycoll BT 5028 (Bayer AG, Leverkusen): Polypropylenetherpolyol mit einer OH-Zahl von 28,6 mgKOH/g erhalten nach DE-OS 2513815. Das Polyetherpolyol enthält 20 Gew.-% eines Umsetzungsproduktes von Toluylendiisocyanat und Hydrazinhydrat in Form einer feinteiligen sedimentationstabilen Dispersion in einem trifuktionellen Polyether der OH-Zahl 35. |
| | |
| Polyol II | Baycoll BT 5035 (Bayer AG, Leverkusen): Polypropylenetherglykol der OH-Zahl 35 mgKOH/g gestartet auf Glyzerin Ethylenoxidgehalt ca. 20 Gew.-%. |
| | |
| Polyol III | Baycoll BD 2060 (Bayer AG, Leverkusen): Polypropylenetherglykol der OH-Zahl 56 mgKOH/g. |
| | |
| Polyol IV | Baycoll BD 1110 (Bayer AG, Leverkusen): Polypropylenetherglykol der OH-Zahl 112 mgKOH/g. |
| | |
| Polyol V | Baycoll ET 3059 (Bayer AG, Leverkusen): Amingestartetes Polypropylenetherpolyol der OH-Zahl 56 mgKOH/g. |
| | |
| Polyol VI | Arcol 1096 (Lyondell, USA): Polypropylenetherpolyol mit einer OH-Zahl von 28 mgKOH/g; enthält 40 Gew.-% eines Styrol-Acrylnitril Polymeren in Form einer feinteiligen sedimentationstabilen Dispersion in einem trifunktionellen Polyether. |
| | |
| Polyol VII | Terathane 2000 (Dupont, Europa): Polytetramethylenetherglykol der OH-Zahl 112 mgKOH/g. |

### Polyisocyanate

| | |
|---|---|
| Iso-I | Desmodur VP KA 8616 (Bayer AG, Leverkusen) (Monomer-MDI): Mischung von 54 Gew.-% 2,4'-MDI und 46 Gew.-% 4,4'-MDI. |
| | |
| Iso-II | Desmodur VKS 20 F (Bayer AG, Leverkusen) (Polymer-MDI) mit einem NCO-Gehalt von 31,6 % und einem Polymeranteil von 50 Gew.-%. |
| | |
| Iso-III | Desmodur VK 5 (Bayer AG, Leverkusen) (Polymer-MDI) mit einem NCO-Gehalt von 32,6 % und einem Polymeranteil von 10 Gew.-% und einem 2,4'-MDI-Gehalt von 45 %. |
| | |
| Iso-IV | Desmodur VK 10 (Bayer AG, Leverkusen) (Polymer-MDI) mit einem NCO-Gehalt von 31,5 % und einem Polymeranteil von 38 Gew.-% und einem 2,4'-MDI-Anteil von 17 Gew.-%. |

### Beispiel 1 (erfindungsgemäß)

Aus 589 g Pol-1 und 611 g ISO-IV erhält man ein NCO-Prepolymer mit einem NCO-Gehalt von 14,67 % und einer Viskosität von 6500 mPa*s bei 23°C.

Mit 0,01 % Gew.-% Dibutylzinndilaurat erhält man ein Filmtrockenzeit (FTZ) von 45 Minuten.

### Beispiel 2 (Vergleich)

Aus 292 g Pol-II, 291 Pol-VI g und 617 g ISO-IV erhält man ein NCO-Prepolymer mit einem NCO-Gehalt von 15,16 % und einer Viskosität von 7600 mPa*s bei 23°C.

Mit 0,01 % Gew.-% Dibutylzinndilaurat erhält man ein Filmtrockenzeit (FTZ) von 37 Minuten.

### Beispiel 3 (Vergleich)

Aus 152 g Pol-III, 280 g Pol-V und 400 g ISO-II und 170 g Iso-III erhält man ein NCO-Prepolymer mit einem NCO-Gehalt von 16,10 % und einer Viskosität von 5600 mPa*s bei 23°C.

Die Filmtrockenzeit (FTZ) beträgt 56 Minuten.

### Beispiel 4 (Vergleich)

Aus 222 g Pol-IV, 222 g Pol-V und 556 g ISO-I erhält man ein NCO-Prepolymer mit einem NCO-Gehalt von 15,60 % und einer Viskosität von 1950 mPa*s bei 23°C.

Die Filmtrockenzeit (FTZ) beträgt 58 Minuten.

### Beispiel 5 (Vergleich)

Aus 490 g Pol-III und 357 g Iso-II und 170 g Iso-III erhält man ein NCO-Prepolymer mit einem NCO-Gehalt von 13,40 % und einer Viskosität von 6500 mPa*s bei 23°C.

Nach Zugabe von 0,2 % Tosylisocyanat und 0,25 % Dibutylzinndilaurat erhaält man eine Filmtrockenzeit (FTZ) von 43 Minuten.

### Beispiel 6 (Vergleich)

Aus 371 g Pol-VII, 15 g Trimethylolpropan und 614 g ISO-I und 170 g Iso-II erhält man ein NCO-Prepolymer mit einem NCO-Gehalt von 16,10 % und einer Viskosität von 3100 mPa*s bei 23°C.

Die Filmtrockenzeit (FTZ) beträgt nach Zugabe von 0,015 % DBTL 42 Minuten.

### Holzklebungen

Die Klebstoffe wurden dem Institut für Fenstertechnik e.V. in Rosenheim zur Prüfung nach DIN EN 204, der Beanspruchungsgruppe D4 und dem WATT 91-Test zur Verfügung gestellt.

Es wurden immer 20 norm gerechte Prüfkörper hergestellt und ausgeprüft.

Man erhielt die folgenden Ergebnisse:

**Tabelle 1: Prüfergebnisse**

| Beispiel | 1 | 2 | 3 | 4 | 5 | 6 |
|---|---|---|---|---|---|---|
| Prüfung | N/mm²/ %FTV | N/mm²/ %FTV | N/mm²/ %FTV | N/mm²/ %FTV | N/mm²/ %FTV | N/mm²/ %FTV |
| Lagerung 1 | 10,83 | 11,56 | 10,46 | 11,53 | 10,80 | 10,52 |
| | 100 | 100 | 100 | 100 | 100 | 100 |
| Lagerung 3 | 7,98 | 7,03 | 5,12 | 5,61 | 5,89 | 4,97 |
| | 60-90 | 0 | 0 | 0 | 0 | 0 |
| Lagerung 5 | 4,87 | 6,73 | 6,43 | 5,96 | 6,55 | 7,23 |
| | 0-100 | 0 | 0 | 0 | 0-75 | 0 |
| Lagerung 6 | 12,43 | 12,18 | 10,48 | 10,02 | 10,08 | 12,88 |
| | 100 | 100 | 100 | 100 | 100 | 100 |
| WATT 91 | 11,74 | 14,02 | 12,71 | 10,00 | 12,84 | 12,30 |
| | 100 | 50-100 | 100 | 0-30 | 0-100 | 100 |

| | | | | | | |
|---|---|---|---|---|---|---|
| Lagerung 1: 7 Tage im Normklima (20°C und 65 % relative Luftfeuchte, RLF). Lagerung 3 7 Tage im Normklima; 4 Tage in kaltem Wasser (20°C) Lagerung 5: 7 Tage im Normklima; 6 Stunden im kochendem Wasser; 2 Stunden in kaltem Wasser Lagerung 6: 7 Tage im Normklima; 6 Stunden im kochendem Wasser; 2 Stunden in kaltem Wasser; 7 Tage Normklima WATT 91: 1 Stunde Lagerung bei 80°C und heiß reißen N/mm² Klebfestigkeit im Zugscherversuch bei einer Vorschubgeschwindigkeit von 50 mm/min. FTV: Fügeteilversagen in % der Klebfläche | | | | | | |

Man ersieht aus der Tabelle, daß die DIN EN 204, Beanspruchung D4 zwar von allen Prepolymeren erfüllt wird, aber nur das erfindungsgemäße NCO-Prepolymer bei langer Lagerung in Wasser (Lagerung 3) noch ein beträchtliches Fügeteilversagen aufweist.

Außerdem wird von dem erfmdungsgemäßen Prepolymer auch der Wärmetest (WATT 91) sehr gut bestanden.

## Patentansprüche

1. Verwendung von einkomponentigen Klebstoffen auf Basis von Isocyanat-terminierten Prepolymeren mit einem Isocyanatgehalt von 8 bis 20 Gew.-% und einer Viskosität von weniger als 20 000 mPa*s bei 25°C enthaltend
a) mindestens ein organisches Polyisocyanat,
b) mindestens eine organische Polyhydroxylverbindung in Form einer Dispersion enthaltend Umsetzungsprodukte aus
i) organischen Polyisocyanaten mit
ii) primären und/oder sekundären Aminogruppen aufweisenden Polyaminen und/oder Hydrazinene und/oder Hydraziden in einem
iii) mindestens zwei Hydroxylgruppen aufweisenden Polyether mit einem Molekulargewichtsbereich von 500 bis 12000
wobei es sich in der Dispersion b) enthaltenden Umsetzungsprodukte um Polyharnstoffe und/oder Polyhydrazodicarbonamide handelt, wobei diese in dem Isocyanat-terminierten Prepolymer einen Gehalt von 2 Gew.-%, bezogen auf die Gesamtmenge an Isocyanat-terminierten Prepolymer, nicht unterschreiten,
c) gegebenenfalls Hilfs- und Zusatzmittel,
zur Verklebung von Holzsubstraten.

2. Verwendung nach Anspruch 1, **dadurch gekennzeichnet, dass** die in der Dispersion b) enthaltenden Umsetzungsprodukte Polyharnstoffe und/oder Polyhydrazodicabonamide sind, deren Anteil 5 bis 15 Gew.%, bezogen auf die Gesamtmenge an Isocyanat-terminierten Prepolymer, beträgt.

3. Verwendung nach Anspruch 1, **dadurch gekennzeichnet, dass** die Polyharnstoff- und/oder Polyhydrazodicabonamidteilchen eine Größe von 0,01 bis 10µm aufweisen.

4. Verwendung nach Anspruch 1, **dadurch gekennzeichnet, dass** die Dispersion b) einen Feststoffgehalt von 5 bis 40 Gew.% aufweist.

5. Verwendung nach Anspruch 1, **dadurch gekennzeichnet, dass** die Dispersion b) Umsetzungsprodukte aus 16,9 Gew.-Teilen einer Mischung von 2,4- und 2,6- Diisocyantotoluol (i) in einem Verhältnis von 80 zu 20 mit 4,85 Gew.-Teilen Hydrazinhydrat (ii) in 80 Gew.-Teilen eines Polypropylenetherpolyols (iii) mit einer Funktionalität größer 2 enthält.

6. Verwendung nach Anspruch 1, **dadurch gekennzeichnet, dass** das Polypropylenetherpolyol (iii) einen Ethoxyethylengruppengehalt von 0 bis 30 Gew.% und eine Hydroxylzahl von 20 bis 56 mgKOH/g aufweist.

7. Verwendung nach Anspruch 1, **dadurch gekennzeichnet, dass** organische Polyisocyanaten a) wie sie durch Phosgenierung von Anilin/Formaldehyd-Kondensaten erhalten werden, mit einem Anteil von 0 bis 60 Gew.-% an difunktionellen 2,4'-MDI und einem Anteil an höheren Oligomeren mit der Funktionalität größer 2 von 0 bis 50 Gew.-% eingesetzt werden.

8. Holzteile erhalten durch die Verwendung von einkomponentigen Klebstoffen auf Basis von Isocyanat-terminierten Prepolymeren gemäß Ansprüchen 1 bis 7.

9. Einkomponentige Klebstoffe auf Basis von Isocyanat-terminierten Prepolymeren mit einem Isocyanatgehalt von 8 bis 20 Gew.-% und einer Viskosität von weniger als 20 000 mPa*s bei 25°C enthaltend
a) mindestens ein organisches Polyisocyanat,
b) mindestens eine organische Polyhydroxylverbindung in Form einer Dispersion enthaltend Umsetzungsprodukte aus
i) organischen Polyisocyanaten mit
ii) primären und/oder sekundären Aminogruppen aufweisenden Polyaminen und/oder Hydrazinene und/oder Hydraziden in einem
iii) mindestens zwei Hydroxylgruppen aufweisenden Polyether mit einem Molekulargewichtsbereich von 500 bis 12000,
wobei es sich bei dieser organischen Polyhydroxylverbindung um Polyharnstoffe und/oder Polyhydrazodicarbonamide handelt, wobei diese in dem Isocyanat-terminierten Prepolymer einen Gehalt von 2 Gew.-%, bezogen auf die Gesamtmenge an Isocyanat-terminierten Prepolymer, nicht unterschreiten sollten, sowie
c) gegebenenfalls Hilfs- und Zusatzmittel.

## Claims

1. Use of one-component adhesives based on isocyanate-terminated prepolymers having an isocyanate content of 8 to 20% by weight and a viscosity of less than 20 000 mPa*s at 25°C, comprising
a) at least one organic polyisocyanate,
b) at least one organic polyhydroxyl compound in the form of a dispersion comprising reaction products of
i) organic polyisocyanates with
ii) primary and/or secondary amino-containing polyamines and/or hydrazines and/or hydrazides in a
iii) polyether containing at least two hydroxyl groups and having a molecular weight range from 500 to 12 000,
where reaction products present in dispersion b) comprise polyureas and/or polyhydrazodicarbonamides, which in the isocyanate-terminated prepolymer do not fall below a level of 2% by weight, based on the total amount of isocyanate-terminated prepolymer,
c) if desired, auxiliaries and additives
for adhesively bonding wood substrates.

2. Use according to Claim 1, **characterized in that** the reaction products present in the dispersion b) are polyureas and/or polyhydrazodicarboxamides whose fraction is 5 to 15% by weight, based on the total amount of isocyanate-terminated prepolymer.

3. Use according to Claim 1, **characterized in that** the polyurea and/or polyhydrazodicarboxamide particles have a size of from 0.01 to 10 µm.

4. Use according to Claim 1, **characterized in that** the dispersion b) has a solids content of from 5 to 40% by weight.

5. Use according to Claim 1, **characterized in that** the dispersion b) comprises reaction products of 16.9 parts by weight of a mixture of 2,4- and 2,6-diisocyantotoluene (i) in a ratio of 80 to 20 with 4.85 parts by weight of hydrazine hydrate (ii) in 80 parts by weight of a polypropylene ether polyol (iii) having a functionality greater than 2.

6. Use according to Claim 1, **characterized in that** the polypropylene ether polyol (iii) has an ethoxyethylene group content of from 0 to 30% by weight and a hydroxyl number of from 20 to 56 mgKOH/g.

7. Use according to Claim 1, **characterized in that** organic polyisocyanates a) as obtained by phosgenating aniline/formaldehyde condensates, having a fraction of from 0 to 60% by weight of difunctional 2,4'-MDI and a fraction of higher oligomers having a functionality greater than 2 of from 0 to 50% by weight, are used.

8. Wooden parts obtained through the use of one-component adhesives based on isocyanate-terminated prepolymers according to Claims 1 to 7.

9. One-component adhesives based on isocyanate-terminated prepolymers having an isocyanate content of 8 to 20% by weight and a viscosity of less than 20 000 mPa*s at 25°C, comprising
a) at least one organic polyisocyanate,
b) at least one organic polyhydroxyl compound in the form of a dispersion comprising reaction products of
i) organic polyisocyanates with
ii) primary and/or secondary amino-containing polyamines and/or hydrazines and/or hydrazides in a
iii) polyether containing at least two hydroxyl groups and having a molecular weight range from 500 to 12 000,
this organic polyhydroxyl compound comprising polyureas and/or polyhydrazodicarbonamides, which in the isocyanate-terminated prepolymer ought not to fall below a level of 2% by weight, based on the total amount of isocyanate-terminated prepolymer, and
c) if desired, auxiliaries and additives.

## Revendications

1. Utilisation d'adhésifs monocomposants à base de prépolymères à terminaison isocyanate ayant une teneur en isocyanate de 8 à 20 % en poids et une viscosité inférieure à 20 000 mPas*s à 25°C, contenant
a) au moins un polyisocyanate organique,
b) au moins un composé polyhydroxyle organique sous la forme d'une dispersion contenant des produits de réaction de
i) des polyisocyanates organiques avec
ii) des polyamines et/ou hydrazines et/ou hydrazides comportant des groupes amino primaires et/ou secondaires dans
iii) un polyéther comportant au moins deux groupes hydroxyle ayant une plage de poids moléculaire allant de 500 à 12 000,
les produits de réaction contenus dans la dispersion b) correspondant à des polyurées et/ou des polyhydrazodicarbonamides, leur teneur dans le prépolymère à terminaison isocyanate n'étant pas inférieure à 2 % en poids, par rapport à la totalité du prépolymère à terminaison isocyanate,
c) éventuellement des adjuvants et additifs,
pour le collage de substrats de bois.

2. Utilisation selon la revendication 1, **caractérisée en ce que** les produits de réaction contenus dans la dispersion b) sont des polyurées et/ou des polyhydrazodicarbonamides, dont la proportion est de 5 à 15 % en poids, par rapport à la totalité du prépolymère à terminaison isocyanate.

3. Utilisation selon la revendication 1, **caractérisée en ce que** les particules de polyurées et/ou de polyhydrazodicarbonamides présentent une taille de 0,01 à 10 µm.

4. Utilisation selon la revendication 1, **caractérisée en ce que** la dispersion b) présente une teneur en solides de 5 à 40 % en poids.

5. Utilisation selon la revendication 1, **caractérisée en ce que** la dispersion b) contient des produits de réaction de 16,9 parties en poids d'un mélange de 2,4-et 2,6-diisocyanatotoluène (i) en un rapport de 80 sur 20 avec 4,85 parties en poids d'hydrate d'hydrazine (ii) dans 80 parties en poids d'un éther de polypropylène-polyol (iii) ayant une fonctionnalité supérieure à 2.

6. Utilisation selon la revendication 1, **caractérisée en ce que** l'éther de polypropylène-polyol (iii) présente une teneur en groupes éthoxyéthylène de 0 à 30 % en poids et un indice hydroxyle de 20 à 56 mg de KOH/g.

7. Utilisation selon la revendication 1, **caractérisée en ce que** les polyisocyanates organiques a) sont utilisés tels qu'obtenus par phosgénation de condensats aniline/formaldéhyde, avec une proportion de 0 à 60 % en poids de 2,4'-MDI bifonctionnel et une proportion d'oligomères supérieurs ayant une fonctionnalité supérieure à 2 de 0 à 50 % en poids.

8. Pièces en bois obtenues par l'utilisation d'adhésifs monocomposants à base de prépolymères à terminaison isocyanate selon les revendications 1 à 7.

9. Adhésifs monocomposants à base de prépolymères à terminaison isocyanate ayant une teneur en isocyanate de 8 à 20% en poids et une viscosité inférieure à 20 000 mPa*s à 25°C, contenant
a) au moins un polyisocyanate organique,
b) au moins un composé polyhydroxyle organique sous la forme d'une dispersion contenant des produits de réaction de
i) des polyisocyanates organiques avec
ii) des polyamines et/ou hydrazines et/ou hydrazides comportant des groupes amino primaires et/ou secondaires dans
iii) un polyéther comportant au moins deux groupes hydroxyle ayant une plage de poids moléculaire allant de 500 à 12 000,
ce composé polyhydroxyle organique correspondant à des polyurées et/ou des polyhydrazodicarbonamides, leur teneur dans le prépolymère à terminaison isocyanate ne devant pas être inférieure à 2 % en poids, par rapport à la totalité du prépolymère à terminaison isocyanate, ainsi que
c) éventuellement des adjuvants et additifs.
